# EUROPÄISCHE PATENTSCHRIFT

(11) **EP 2 488 585 B1**
(45) Veröffentlichungstag und Bekanntmachung des Hinweises auf die Patenterteilung: **18.06.2014**
(21) Anmeldenummer: 10770765.5
(22) Anmeldetag: 12.10.2010
(51) Int. Cl.: C08L 67/02, C08L 67/04

(54) **VERFAHREN ZUR KONTINUIERLICHEN HERSTELLUNG VON POLYESTERMISCHUNGEN**
METHOD FOR CONTINUOUSLY PRODUCING POLYESTER MIXTURES
PROCÉDÉ DE FABRICATION CONTINUE DE MÉLANGES DE POLYESTER

(30) Priorität: 15.10.2009 EP 09173193
(43) Veröffentlichungstag der Anmeldung: 22.08.2012
(73) Patentinhaber: BASF SE, 67056 Ludwigshafen (DE)
(72) Erfinder: LOOS, Robert, 68165 Mannheim (DE); WITT, Uwe, 67112 Mutterstadt (DE); YAMAMOTO, Motonori, 68199 Mannheim (DE); MAIR, Gunther, 68163 Mannheim (DE); GARBE, Andreas, 67071 Ludwigshafen (DE)
(86) Internationale Anmeldenummer: PCT/EP2010/065233
(87) Internationale Veröffentlichungsnummer: WO 2011/045293

(56) Entgegenhaltungen:
- WO-A1-03/042278
- WO-A1-2009/127556
- DE-A1- 19 929 790
- DE-A1-102005 053 068

## Beschreibung

Die vorliegende Erfindung betrifft ein Verfahren zur kontinuierlichen Herstellung von Polyestermischungen enthaltend:
a) 10 bis 80 Gew.-% eines biologisch abbaubaren Polyesters (Q) aus aliphatischen oder aliphatischen und aromatischen Dicarbonsäuren und aliphatischen Dihydroxyverbindungen, und
b) 20 bis 90 Gew.- eines oder mehrerer Polymere (T) ausgewählt aus der Gruppe bestehend aus: Polymilchsäure, Polycaprolacton, Polypropylencarbonat, Polyglycolid, aliphatischem Polyester, Zelluloseacetat und Polyhydroxyalkanoat,
wobei
i) eine Mischung aus den aliphatischen Dihydroxyverbindungen, den aliphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden, in eine ersten Stufe diese Mischung zusammen mit der Gesamtmenge oder einer Teilmenge des Katalysators kontinuierlich verestert bzw. umgeestert wird;
ii) in einer zweiten Stufe kontinuierlich das gemäß i) erhaltene Umesterungs- bzw. Veresterungsprodukt bis zu einer Viskositätszahl nach DIN 53728 von 20 bis 70 cm³/g vorkondensiert wird;
iii) in einer dritten Stufe kontinuierlich das aus ii) erhältliche Produkt bis zu einer Viskositätszahl nach DIN 53728 von 60 bis 170 cm³/g polykondensiert wird und
iv) in einer vierten Stufe kontinuierlich das aus iii) erhältliche Produkt (Polyester Q) mit dem Polymeren T vermischt wird und
v) gegebenenfalls in einer fünften Stufe kontinuierlich die aus iv) erhältliche Polymermischung bis zu einer Viskositätszahl nach DIN 53728 von 150 bis 320 cm³/g in einer Polyadditionsreaktion mit einem Kettenverlängerer D umgesetzt wird.

Insbesondere betrifft die Erfindung ein Verfahren zur kontinuierlichen Herstellung von Polymermischungen enthaltend:
a) 40 bis 75 Gew.-% eines biologisch abbaubaren Polyesters (Q) aus aliphatischen oder aliphatischen und aromatischen Dicarbonsäuren und aliphatischen Dihydroxyverbindungen, und
b) 25 bis 60 Gew.- Polymilchsäure,
wobei
i) eine Mischung aus den aliphatischen Dihydroxyverbindungen, den aliphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden, in eine ersten Stufe diese Mischung zusammen mit der Gesamtmenge oder einer Teilmenge des Katalysators kontinuierlich verestert bzw. umgeestert wird;
ii) in einer zweiten Stufe kontinuierlich das gemäß i) erhaltene Umesterungs- bzw. Veresterungsprodukt bis zu einer Viskositätszahl nach DIN 53728 von 20 bis 60 cm³/g vorkondensiert wird;
iii) in einer dritten Stufe kontinuierlich das aus ii) erhältliche Produkt bis zu einer Viskositätszahl nach DIN 53728 von 70 bis 130 cm³/g polykondensiert wird und
iv) in einer vierten Stufe kontinuierlich das aus iii) erhältliche Produkt (Polyester Q) mit Polymilchsäure vermischt wird und
v) vorzugsweise in einer fünften Stufe kontinuierlich die aus iv) erhältliche Polymermischung bis zu einer Viskositätszahl nach DIN 53728 von 150 bis 320 cm³/g in einer Polyadditionsreaktion mit einem Kettenverlängerer D umgesetzt wird.

Im Stand der Technik sind zur Herstellung von Polyestermischungen enthaltend biologisch abbaubaren Polyestern Q auf Basis von aliphatischen und/oder aromatischen Dicarbonsäuren und aliphatischen Dihydroxyverbindungen und Polymeren T insbesondere diskontinuierliche (Batch)-Verfahren beschrieben, d.h. Verfahren durch Aufschmelzen der granulierten Polyester Q und der granulierten Polymere T and anschließendes Mischen in dafür geeigneten Mischaggregaten (WO-A 06/074815 und WO-A 96/15173). Auch die Polyester Q selbst werden meist diskontinuierlich hergestellt. In der nachveröffentlichen PCT/EP2009/054116 wird erläutert, dass sich die in einer diskontinuierlichen Fahrweise ergebenden Nachteile mit der kontinuierlichen Polyestersynthese der Stufen i bis iii) überwinden lassen. Auf diese Weise ließen sich erstmals Polyester mit einer Säurezahl kleiner 1,0 und einem insbesondere für Extrusionsanwendungen interessanten Viskositätsbereich herstellen. Da die Polymere T säureempfindlich sind, sind die zuvor genannten kontinuierlich hergestellten Polyester besonders gut zur Herstellung von Mischungen mit den Polymeren T geeignet.

Für die in PCT/EP2009/054116 beschriebenen Mischungen wird der Polyester zunächst granuliert, dann wieder aufgeschmolzen und mit der Polymerschmelze von T vereinigt. Hierbei kommt es zum Wassereintrag, was den hydrolyseempfindlichen Polymeren T schadet. Weiterhin kann das obengenannte Verfahren des Granulierens und Wiederaufschmelzens zum Stippeneintrag führen, was für Anwendungen wie dünne Filmanwendungen ein großes Problem darstellt.

Überraschenderweise wurde nun gefunden, dass sich das eingangs erwähnte erfindungsgemäße Verfahren der Stufen i bis iv und vorzugsweise i bis v hervorragend zur Herstellung von stippenfreien, wasserarmen Polyestermischungen eignet.

Unter biologisch abbaubaren Polyestern Q werden aliphatische und teilaromatische Polyester verstanden - wie sie beispielsweise in der WO-A 96/15173 und DE-A 10 2005053068 beschrieben sind.

Insbesondere werden unter biologisch abbaubaren Polyestern aliphatisch/aromatische Polyester verstanden, die wie folgt aufgebaut sind:
A) einer Säurekomponente aus
   a1) 30 bis 99 mol-% mindestens einer aliphatischen Dicarbonsäure oder deren Ester oder Mischungen davon
   a2) 1 bis 70 mol-% mindestens einer aromatischen Dicarbonsäure oder deren Ester oder Mischungen davon und
   a3) 0 bis 5 mol-% einer sulfonatgruppenhaltigen Verbindung,
   wobei die Molprozente der Komponenten a1) bis a3) zusammen 100% ergeben und
B) einer Diolkomponente aus, und
   b1) mindestens äquimolare Mengen zur Komponente A eines C₂-bis C₁₂-Alkandiol oder Mischungen davon und
   b2) 0 bis 2 Gew.-% bezogen auf die Polyestermenge nach Stufe iii (entspricht der eingesetzten Menge der Komponenten A und B abzüglich der abgetrennten Reaktionsdämpfe) einer mindestens 3 funktionelle Gruppen enthaltenden Verbindung,
   und gegebenenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen,
   c2) mindestens einer Hydroxycarbonsäure der Formellla oder IIb 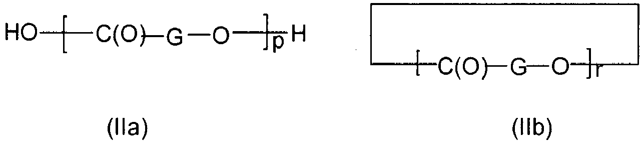 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁- bis C₈-Alkan
   c5) mindestens einer Aminocarbonsäureverbindung ausgewählt aus der Gruppe, bestehend aus Caprolactam, 1,6 Aminocapronsäure, Laurinlactam, 1,12-Aminolaurinsäure und 1,11-Aminoundecansäure
   oder Mischungen aus c1) bis c5)
   und
D) 0,01 bis 4 Gew.-% bezogen auf die Polyestermenge in oder nach Stufe iv mindestens einer Komponente ausgewählt aus der Gruppe d1) bis d4)
   d1) eines di- oder oligofunktionellen Isoscyanats und/oder Isocyanurat,
   d2) eines di- oder oligofunktionellen Peroxids,
   d3) eines di- oder oligofunktionellen Epoxids,
   d4) eines di- oder oligofunktionellen Oxazolins, Oxazins, Caprolactams und/oder Carbodiimids;
E) 0 bis 15 Gew.-% bezogen auf die Polyestermenge nach Stufe iii einer Komponente ausgewählt aus der Gruppe e1) bis e3)
   e1) eines Gleitmittels wie Erucasäureamid oder ein Stearat,
   e2) eines Nukleierungsmittels wie Talkum, Calciumcarbonat, Bornitrid, PLLA-PDLA-Stereokomplex, Polyethylenterephthalats oder Polybutylenterephthalats,

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2. In einer besonders bevorzugten Ausführungsform enthält die Säurekomponente A der teilaromatischen Polyester mehr als 50 mol.-% an aliphatischer Dicarbonsäure a1). Derartige Polyester zeichnen sich durch ein exzellentes biologisches Abbauverhalten aus.

Als aliphatische Säuren und die entsprechenden Derivate a1 kommen im Allgemeinen solche mit 2 bis 40 Kohlenstoffatomen, vorzugsweise 4 bis 14 Kohlenstoffatomen, in Betracht. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Malonsäure, Bernsteinsäure, Glutarsäure, 2-Methylglutarsäure, 3-Methylglutarsäure, Adipinsäure, Pimelinsäure, Korksäure, Azelainsäure, Sebacinsäure, Undecandisäure, Dodecandisäure, Brassylsäure, Tetradecandisäure, Fumarsäure, 2,2-Dimethylglutarsäure, Suberinsäure, Dimerfettsäure (wie z.B. Empol® 1061 der Fa. Cognis) 1,3-Cyclopentandicarbonsäure, 1,4-Cyclohexandicarbonsäure, 1,3-Cyclohexandicarbonsäure, Diglykolsäure, Itaconsäure, Maleinsäure, Maleinsäureanhydrid und 2,5-Norbornandicarbonsäure.

Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Als aliphatische Dicarbonsäure werden Sebacinsäure oder Mischungen von Sebacinsäure mit Adipinsäure bevorzugt eingesetzt, wenn Polymermischungen mit "harten" bzw. "spröden" Komponenten ii) wie beispielsweise Polyhydroxybutyrat oder insbesondere Polylactid hergestellt werden. Als aliphatische Dicarbonsäure werden Bernsteinsäure oder Mischungen von Bernsteinsäure mit Adipinsäure bevorzugt eingesetzt, wenn Polymermischungen mit "weichen" bzw. "zähen" Komponenten ii) wie beispielsweise Polyhydroxybuyratcovaleriat oder Poly-3-hydroxybuyrat-co-4-hydroxybutyrat hergestellt werden.

Bernsteinsäure, Azelainsäure, Sebacinsäure und Brassylsäure haben zudem den Vorteil dass sie als nachwachsende Rohstoffe zugänglich sind.

Als aromatische Dicarbonsäure a2 sind im Allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z.B. Dimethyl-, Diethyl-, Di-n-propyl-, Di-iso-propyl, Di-n-butyl-, Di-iso-butyl, Di-t-butyl, Di-n-pentyl-, Di-iso-pentyl oder Di-n-hexylester zu nennen. Die Anhydride der Dicarbonsäuren a2 sind ebenso geeignete esterbildende Derivate.

Prinzipiell können jedoch auch aromatische Dicarbonsäuren a2 mit einer größeren Anzahl an Kohlenstoffatomen, beispielsweise bis zu 20 Kohlenstoffatomen, eingesetzt werden.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Als sulfonatgruppenhaltige Verbindung setzt man üblicherweise ein Alkali- oder Erdalkalimetallsalz einer sulfonatgruppenhaltigen Dicarbonsäure oder deren esterbildende Derivate ein, bevorzugt Alkalimetallsalze der 5-Sulphoisophthalsäure oder deren Mischungen, besonders bevorzugt das Natriumsalz.

Nach einer der bevorzugten Ausführungsformen enthält die Säurekomponente A von 40 bis 60 mol-% a1, von 40 bis 60 mol-% a2 und von 0 bis 2 mol-% a3.

Im Allgemeinen werden die Diole B unter verzweigten oder linearen Alkandiolen mit 2 bis 12 Kohlenstoffatomen, bevorzugt 4 bis 6 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 1,6-Hexandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

In der Regel wird in den Verfahrensstufen i) und ii) ein Verhältnis von Komponente b1 (Diol) zu Disäuren A von 1,5 bis 2,5 und vorzugsweise 1,8 bis 2,2 eingestellt.

Die Verbindungen b2) enthalten bevorzugt mindestens drei funktionelle Gruppen enthaltende Vernetzer. Besonders bevorzugte Verbindungen haben drei bis sechs Hydroxylgruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Die Verbindungen b2 können als Verzweiger oder auch Vernetzer wirken. Mittels der Komponenten b2 lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen. Die Verbindungen b2 wirken scherentzähend, d.h. die Viskosität unter Belastung wird geringer.

Die Verbindungen b2 werden vorzugsweise in Mengen von 0,01 bis 2, bevorzugt 0,05 bis 1, besonders bevorzugt 0,08 bis 0,20 Gew.-%, bezogen auf die Polymermenge nach Stufe iii) eingesetzt.

Neben den Komponenten A und B können die Polyester, auf denen die erfindungsgemäßen Polyestermischungen basieren, weitere Komponenten enthalten.

Als Dihydroxyverbindungen c1 eignen sich Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, ein, wobei man auch Mischungen davon oder Verbindungen, die unterschiedliche Variablen n aufweisen (siehe Formel I), beispielsweise Polyethylenglykol, das Propyleneinheiten (n = 3) enthält, beispielsweise erhältlich durch Polymerisation nach an sich bekannten Methoden von zuerst Ethylenoxid und anschließend mit Propylenoxid, besonders bevorzugt ein Polymer auf Basis von Polyethylenglykol, mit unterschiedlichen Variablen n, wobei Einheiten gebildet aus Ethylenoxid überwiegen. Das Molekulargewicht (Mₙ) des Polyethylenglykols wählt man in der Regel im Bereich von 250 bis 8000, bevorzugt von 600 bis 3000 g/mol.

Nach einer der bevorzugten Ausführungsformen können beispielsweise von 15 bis 98, bevorzugt 60 bis 99,5 mol-% der Diole B und 0,2 bis 85, bevorzugt 0,5 bis 30 mol-% der Dihydroxyverbindungen c1, bezogen auf die molare Menge von B und c1, für die Herstellung der teilaromatischen Polyester verwendet werden.

Zur Herstellung von Copolyestern kann Hydroxycarbonsäure c2) eingesetzt werden: Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4-dioxan-2,5-dion), p-Hydroxybenzoesäure sowie deren Oligomere und Polymere wie 3-Polyhydroxybuttersäure, Polyhydroxyvaleriansäure, Polylactid (beispielsweise als NatureWorks® (Fa. Cargill) erhältlich) sowie eine Mischung aus 3-Polyhydroxybuttersäure und Polyhydroxy-valeriansäure (letzteres ist unter dem Namen Biopol® von Zeneca erhältlich), besonders bevorzugt für die Herstellung von teilaromatischen Polyestern sind die niedermolekularen und cyclischen Derivate davon.

Die Hydroxycarbonsäuren können beispielsweise in Mengen von 0,01 bis 50, bevorzugt von 0,1 bis 40 Gew.-% bezogen auf die Menge an A und B verwendet werden.

Als Amino-C₂-C₁₂-alkanol oder Amino-C₅-C₁₀-cyloalkanol (Komponente c3), wobei hierunter auch 4-Aminomethylcyclohexanmethanol fallen soll, setzt man bevorzugt Amino-C₂-C₆-alkanole wie 2-Aminoethanol, 3-Aminopropanol, 4-Aminobutanol, 5-Aminopentanol, 6-Aminohexanol sowie Amino-C₅-C₆-cyloalkanole wie Aminocyclopentanol und Aminocyclohexanol oder Mischungen davon ein.

Als Diamino-C₁-C₈-alkan (Komponente c4) setzt man bevorzugt Diamino-C₄-C₆-alkane ein wie 1,4-Diminobutan, 1,5-Diaminopentan und 1,6-Diaminohexan (Hexamethylendiamin, "HMD").

Nach einer bevorzugten Ausführungsform kann von 0,5 bis 99,5 mol-%, bevorzugt 0,5 bis 50 mol-%, c3, bezogen auf die Molmenge von B, und von 0 bis 50, bevorzugt von 0 bis 35 mol-%, c4, bezogen auf die Molmenge von B, für die Herstellung der teilaromatischen Polyester eingesetzt werden.

Als Komponente c5 können Aminocarbonsäuren ausgewählt aus der Gruppe, bestehend aus Caprolactam, 1,6 Aminocapronsäure, Laurinlactam, 1,12-Aminolaurinsäure und 1,11-Aminoundecansäure verwendet werden.

Im Allgemeinen wird c5 in Mengen von 0 bis 20, bevorzugt von 0,1 bis 10 Gew.-%, bezogen auf die Gesamtmenge der Komponenten A und B, eingesetzt.

Als Komponente d1 werden ein Isocyanat oder eine Mischung unterschiedlicher Isocyanate eingesetzt. Es können aromatische oder aliphatische Diisocyanate eingesetzt werden. Es können aber auch höher funktionelle Isocyanate verwendet werden.

Unter einem aromatischen Diisocyanat d1 werden im Rahmen der vorliegenden Erfindung vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat verstanden.

Darunter werden 2,2'-, 2,4'- sowie 4,4'-Diphenylmethandiisocyanat als Komponente d1 besonders bevorzugt. Im Allgemeinen werden letztere Diisocyanate als Mischung eingesetzt.

Als dreikerniges Isocyanat d1 kommt auch Tri(4-isocyanophenyl)methan in Betracht. Die mehrkernigen aromatischen Diisocyanate fallen beispielsweise bei der Herstellung von ein- oder zweikernigen Diisocyanaten an.

In untergeordneten Mengen, z.B. bis zu 5 Gew.-%, bezogen auf das Gesamtgewicht der Komponente d1, kann die Komponente d1 auch Urethiongruppen, beispielsweise zum Verkappen der Isocyanatgruppen, enthalten.

Unter einem aliphatischen Diisocyanat d1 werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclohexan), verstanden. Besonders bevorzugte aliphatische Diisocyanate d1 sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexamethylendiisocyanat basieren, beispielsweise cyclische Trimere, Pentamere oder höhere Oligomere des 1,6-Hexamethylendiisocyanats.

Im Allgemeinen wird die Komponente d1 in Mengen von 0,01 bis 4, bevorzugt 0,05 bis 2 -, besonders bevorzugt 0,2 bis 1,2 Gew.-% bezogen auf die Polymermenge nach Stufe iii) eingesetzt.

Als di- oder oligofunktionellen Peroxide (Komponente d2) sind beispielsweise die folgenden Verbindungen geeignet: Benzoylperoxid, 1,1-Bis(t.-butylperoxy)-3,3,5-trimethylcyclohexan, 1,1-Bis(t.-butylperoxy)methylcyclododecan, n-Butyl-4,4-bis(butylperoxy)valerat, Dicumylperoxid, t.-Butylperoxybenzoat, Dibutylperoxid, α,α-Bis(t.-butylperoxy)diisopropylbenzol, 2,5-Dimethyl-2,5-di(t.-butylperoxy)hexan, 2,5-Dimethyl-2,5-di(t.-butylperoxy)hexin-3 und t.-Butylperoxycumen.

Die Komponente d2 wird in 0,01 bis 4 Gew.-%, bevorzugt in 0,1 bis 2 Gew.-%, und besonders bevorzugt in 0,2 bis 1 Gew.-%, bezogen auf das Biopolymer eingesetzt.

Als Komponente d3 kommen difunktionelle oder oligofunktionelle Epoxide in Frage wie: Hydrochinon, Diglycidylether, Resorcindiglycidylether, 1,6-Hexandiol-diglycidylether und hydrierter Bisphenol-A-Diglycidylether. Andere Beispiele von Epoxiden umfassen Diglycidylterephthalat, Diglycidyltetrahydrophthalat, Diglycidylhexahydrophthalat, Dimethyldiglycidylphthalat, Phenylendiglycidylether, Ethylendiglycidylether, Trimethylendiglycidylether, Tetramethylendiglycidylether, Hexamethylendiglycidylether, Sorbitoldiglycidylether, Polyglycerin-polyglycidylether, Pentaerythrit-polyglycidylether, Diglycerin-polyglycidylether, Glycerin-polyglycidylether, Trimethylolpropan-polyglycidylether, Resorcin-diglycidylether, Neopentylglycol-diglycidylether, Ethylenglycol-diglycidylether, Diethylenglycol-diglycidylether, Polyethylenglycol-diglycidylether, Propylenglycoldiglycidylether, Dipropylenglycol-diglycidylether, Polypropylenglycol-diglycidylether und Polybutylenglycol-diglycidylether.

Als Komponente d3a ist insbesondere geeignet ein Epoxidgruppen-haltiges Copolymer auf Basis Styrol, Acrylsäureester und/oder Methacrylsäureester d3a. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet sind Joncryl^{®} ADR 4368, langkettige Acrylate wie in der EP Anm. Nr. 08166596.0 beschrieben und Cardura^{®} E10 der Fa. Shell.

Die Komponente d3 wird in 0,01 bis 4 Gew.-%, bevorzugt in 0,1 bis 2 Gew.-%, und besonders bevorzugt in 0,2 bis 1 Gew.-%, bezogen auf das Biopolymer eingesetzt. Die Komponente d3 kann auch als Säurefänger eingesetzt werden. Vorzugsweise wird d3 in dieser Ausführungsform in einer Konzentration von 0,01 bis 0,5 Gew.-% (vor, in oder nach Stufe iv) eingesetzt und anschließend wird eine Kettenverlängerung mit der Komponente d1,d2 und/oder d3a (Stufe v), die in einer Konzentration von vorzugsweise 0,2 bis 1,2 Gew.-% zugesetzt werden, durchgeführt.

Als Komponente d4 kommen di oder oligofunktionelle Oxazoline, Oxazine, Caprolactame und/oder Carbodiimide in Betracht.

Bisoxazoline sind im Allgemeinen erhältlich durch das Verfahren aus Angew. Chem. Int. Ed., Vol. 11 (1972), S. 287-288. Besonders bevorzugte Bisoxazoline und Bisoxazine sind solche, in denen das Brückenglied eine Einfachbindung, eine (CH₂)₂-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Weitere Beispiele sind: 2,2'-Bis(2-oxazolin, 2,2'-Bis(4-methyl-2-oxazolin), 2,2'-Bis(4,4'-dimethyl-2-oxazolin), 2,2'-Bis(4-ethyl-2-oxazolin), 2,2'-Bis(4,4'-diethyl-2-oxazolin), 2,2'-Bis(4-propyl-2-oxazolin), 2,2'-Bis(4-butyl-2-oxazolin), 2,2'-Bis(4-hexyl-2-oxazolin), 2,2'-Bis(4-phenyl-2-oxazolin), 2,2'-Bis(4-cyclohexyl-2-oxazolin), 2,2'-Bis(4-benzyl-2-oxazolin), 2,2'-p-Phenylen-bis(4-methyl-2-oxazolin), 2,2'-p-Phenylen-bis(4,4'dimethyl-2-oxazolin), 2,2'-m-Phenylen-bis(4-methyl-2-oxazolin), 2,2'-m-Phenylen-bis(4,4'-dimethyl-2-oxazolin), 2,2'-Hexamethylen-bis(2-oxazolin), 2,2'-Octamethylen-bis(2-oxazolin), 2,2'-Decamethylen-bis(2-oxazolin), 2,2'-Ethylenbis(4-methyl-2-oxazolin), 2,2'-Tetramethylen-bis(4,4'dimethyl-2-oxazolin), 2,2'-9,9'-Diphenoxyethan-bis(2-oxazolin), 2,2'-Cyclohexylen-bis(2-oxazolin) und 2,2'-Diphenylen-bis(2-oxazolin).

Bevorzugte Bisoxazine sind 2,2'-Bis(2-oxazin), Bis(2-oxazinyl)methan, 1,2-Bis(2-oxazinyl)ethan, 1,3-Bis(2-oxazinyl)propan oder 1,4-Bis(2-oxazinyl)butan, insbesondere 1,4-Bis(2-oxazinyl)benzol, 1,2-Bis(2-oxazinyl)benzol oder 1,3-Bis(2-oxazinyl)benzol.

Carbodiimide und polymere Carbodiimide werden beispielsweise von der Fa. Lanxxess unter dem Markennamen Stabaxol^{®} oder von der Fa. Elastogran unter dem Markennamen Elastostab^{®} vertrieben.

Beispiele sind: N,N'-Di-2,6-diisopropylphenylcarbodiimid, N,N'-Di-o-tolylcarbodiimid, N,N'-Diphenylcarbodiimid, N,N'-Dioctyldecylcarbodiimid, N,N'-Di-2,6-dimethylphenylcarbodiimid, N-Tolyl-N'-cyclohexylcarbodiimid, N,N'-Di-2,6-di-tert.-butylphenylcarbodiimid, N-Tolyl-N'-phenylcarbodiimid, N,N'-Di-p-nitrophenylcarbodiimid, N,N'-Di-p-aminophenylcarbodiimid, N,N'-Di-p-hydroxyphenylcarbodiimid, N,N'-Di-cyclohexylcarbodiimid, N,N'-Di-p-tolylcarbodiimid, p-Phenylen-bis-di-o-tolylcarbodiimid, p-Phenylen-bis-dicyclohexylcarbodiimid, Hexamethylen-bis-dicyclohexylcarbodiimid, 4,4'-Dicyclohexylmethancarbodiimid, Ethylen-bis-diphenylcarbodiimid, N,N'-Benzylcarbodiimid, N-Octadecyl-N'-phenylcarbodiimid, N-Benzyl-N'-phenylcarbodiimid, N-Octadecyl-N'-tolylcarbodiimid, N-Cyclohexyl-N'-tolylcarbodiimid, N-Phenyl-N'-tolylcarbodiimid, N-Benzyl-N'-tolylcarbodiimid, N,N'-Di-o-ethylphenylcarbodiimid, N,N'-Di-p-ethylphenylcarbodiimid, N,N'-Di-o-isopropylphenylcarbodiimid, N,N'-Di-p-isopropylphenylcarbodiimid, N,N'-Di-o-isobutylphenylcarbodiimid, N,N'-Di-p-isobutylphenylcarbodiimid, N,N'-Di-2,6-diethylphenylcarbodiimid, N,N'-Di-2-ethyl-6-isopropylphenylcarbodiimid, N,N'-Di-2-isobutyl-6-isopropylphenylcarbodiimid, N,N'-Di-2,4,6-trimethylphenylcarbodiimid, N,N'-Di-2,4,6-triisopropylphenylcarbodiimid, N,N'-Di-2,4,6-triisobutylphenylcarbodiimid, Diisopropylcarbodiimid, Dimethylcarbodiimid, Diisobutylcarbodiimid, Dioctylcarbodiimid, t-Butylisopropylcarbodiimid, Di-β-naphthylcarbodiimid und Di-t-butylcarbodiimid.

Die Komponente d4 wird in 0,01 bis 4 Gew.-%, bevorzugt in 0,1 bis 2 Gew.-%, und besonders bevorzugt in 0,2 bis 1 Gew.-%, bezogen auf das Biopolymer eingesetzt. Die Komponente d4 kann auch als Säurefänger eingesetzt werden. Vorzugsweise wird in dieser Ausführungsform d4 in einer Konzentration von 0,01 bis 0,5 Gew.-% in oder nach Stufe iv eingesetzt und anschließend wird eine Kettenverlängerung mit der Komponente d1, d2 und/oder d3a (Stufe v), die in einer Konzentration von vorzugsweise 0,2 bis 1,2 Gew.-% zugesetzt werden, durchgeführt.

In einer bevorzugten Ausführungsform des erfindungsgemäßen Verfahrens werden zwischen Stufe iii und iv oder während Stufe iv eine Komponente ausgewählt aus der Gruppe: Gleitmittel (e1), Nukleierungsmittel (e2) und/oder Verträglichkeitsvermittler (e3) zugefügt. Besonders bevorzugt erfolgt die Zugabe der Komponente E am Ende der Stufe iii. Besonders bevorzugt ist einen oder mehrere Zusatzstoffe wie Gleitmittel (e1), Nukleierungsmittel (e2) und/oder Verträglichkeitsvermittler/Kettenverlängerer (d3) und/oder Säurefänger (d4) mit dem Polymer T zu einem Mastermatch zu mischen und diesen Masterbatch in Stufe iv zuzumischen.

Als Gleitmittel oder auch Formtrennmittel (Komponente e1) haben sich insbesondere Kohlenwasserstoffe, Fettalkohole, höhere Carbonsäuren, Metallsalze höherer Carbonsäuren wie Calcium- oder Zinkstearat, Fettsäureamide wie Erucasäureamid und Wachstypen, z-B. Paraffinwachse, Bienenwachs oder Montanwachse bewährt. Bevorzugte Gleitmittel sind Erucasäureamid und/oder Wachstypen und besonders bevorzugt Kombinationen dieser Gleitmittel. Bevorzugte Wachstypen sind Bienenwachse und Esterwachse, insbesondere Glycerinmonostearat oder Dimethylsiloxan oder Polydimethylsiloxan wie z.B. Belsil^{®} DM der Fa. Wacker. Durch die Zugabe der Gleitmittel vor der Kettenverlängerung können die Gleitmittel an die Polymerkette teilweise angebunden werden. Ein vorzeitiges Ausschwitzen der Gleitmittel aus den fertigen Polymermassen kann auf diese Weise effektiv unterbunden werden.

Die Komponente e1 wird in der Regel in 0,05 bis 2,0 Gew.-% und vorzugsweise 0,1 bis 1,0 Gew.-% bezogen auf die Polymermasse am Ende der Stufe iii zugegeben.

Als Nukleierungsmittel (Komponente e2) kommen in der Regel anorganische Verbindungen wie Talkum, Kreide, Glimmer, Bornitrid, Siliziumoxide oder Bariumsulfat und organische Verbindungen wie Beta-Cyclodextrin oder Decamethylendicarbonsäuredihydrazid in Frage. Bei den erfindungsgemäßen Polyestern haben sich insbesondere aromatische Polyester wie Polyethylenterephthalat und insbesondere Polybutylenterephthalat und PLLA-PDLA-Stereokomplex als vorteilhaft erwiesen. Überraschenderweise wurde gefunden, dass das Nukleierungsmittel e2, zugesetzt nach der Stufe iii, wesentlich effektiver wirkt als zugesetzt nach der Stufe iv. Die Einsatzmenge des Nukleierungsmittels lässt sich bei gleichem technischen Effekt wie schnelle Kristallisierneigung, Vermeidung von Klebrigkeit auf ca. die Hälfte der Einsatzmenge reduzieren. Mit anderen Worten man erhält Polymermassen, die aufgrund ihres niedrigen Gehalts an aromatischen Blöcken noch sehr gut biologisch abbaubar sind, aber dennoch aufgrund des verbesserten Kristallisierverhaltens keine Klebeneigung aufweisen.

Die Komponente e2 wird in der Regel in 0,05 bis 10,0 Gew.-%, bevorzugt 0,05 bis 5,0 Gew.-% und insbesondere bevorzugt 0,1 bis 1,0 Gew.-% bezogen auf die Polymermasse am Ende der Stufe iii zugegeben.

Bevorzugte biologisch abbaubare teilaromatische Polyester Q enthalten als aliphatische Dicarbonsäure (Komponente a1)) Bernsteinsäure, Adipinsäure oder Sebacinsäure, deren Ester oder Mischungen davon; als aromatische Dicarbonsäure (Komponente a2)) Terephthalsäure oder deren Ester;
als Diolkomponente (Komponente B) 1,4-Butandiol oder 1,3-Propandiol,
als Komponente b2) Glycerin, Pentaerytrit, Trimethylolpropan und
als Komponente d1) Hexamethylendiisocyanat.

Das erfindungsgemäße Verfahren (Stufen i bis iii) ist auch zur Herstellung von aliphatischen Polyestern Q' geeignet. Unter aliphatischen Polyestern werden Polyester aus aliphatischen C₂-C₁₂-Alkandiolen und aliphatischen C₄-C₃₆-Alkandicarbonsäuren wie Polybutylensuccinat (PBS), Polybutylenadipat (PBA), Polybutylensuccinatadipat (PBSA), Polybutylensuccinatsebacat (PBSSe), Polybutylensebacatadipat (PBSeA), Polybutylensebacat (PBSe) oder entsprechende Polyesteramide verstanden. Die α-liphatischen Polyester werden von den Firmen Showa Highpolymers unter dem Namen Bionolle und von Mitsubishi unter dem Namen GSPIa vermarktet. Neuere Entwicklungen sind in der EP08165370.1 beschrieben.

Die aliphatischen Polyester weisen in der Regel Viskositätszahlen nach DIN 53728 von 150 bis 320 cm³/g und vorzugsweise 150 bis 250 cm³/g auf.
Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min.
Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Die Polyester Q weisen in der Regel ein Molekulargewicht (Mₙ) nach Stufe iii im Bereich von 1000 bis 100000, insbesondere im Bereich von 9000 bis 75000 g/mol, bevorzugt im Bereich von 20000 bis 50000 g/mol, ein Molekulargewicht (Mw) von 50000 bis 300000, vorzugsweise 75000 bis 200000 g/mol und ein Mw/Mn-Verhältnis von 1 bis 6, vorzugsweise 2 bis 4 auf. Der Schmelzpunkt liegt im Bereich von 60 bis 170, bevorzugt im Bereich von 80 bis 150°C.

Die Polyester Q weisen in der Regel nach Stufe iii Viskositätszahlen nach DIN 53728 von 60 bis 170 cm³/g auf. Im Folgenden ist im Zusammenhang mit Viskositätszahlen stets die Dimension cm³/g gemeint.

Neben einer hohen Viskositätszahl ist es wünschenswert, aliphatisch aromatische Copolyester bereitzustellen, die eine niedrige Säurezahl nach DIN EN 12634 aufweisen. Je niedriger die Säurezahl der aliphatisch/aromatischen Copolyester, desto hydrolysestabiler sind die Polyester für sich alleine genommen oder in Mischungen mit Biopolymeren wie Stärke (thermoplastifiziert oder nicht plastifiziert), Polylactid (PLA), Polyhydroxyalkanoaten, aliphatischem Polyester wie Bionolle^{®}, Zellulose oder Polycaprolacton. Die Lagerstabilität der Polester(mischungen) verbessert sich entsprechend.

Weiterhin lassen sich die in Stufe iii) erhältlichen Prepolyester mit kleiner Säurezahl nach DIN EN 12634 - < 1,2, bevorzugt < 1,0, besonders bevorzugt < 0,9 mg KOH/g - besser kettenverlängern. Kurze Verweilzeiten mit effektiverem Molmassenaufbau und eine geringere Zunahme der Säurezahl in der Folgestufe v) sind die Folge. Nebenreaktionen oder auch unerwünschte Stippenbildung lassen sich nahezu vollständig vermeiden. Die Säurezahl lässt sich vorzugsweise noch weiter senken, wenn die in Stufe iii) enthaltenen Polyester Q mit Säurefängern wie d3 und/oder d4 beispielsweise in Stufe iv behandelt werden und dann erst einer Kettenverlängerung v unterzogen werden.

Neben den Polyestern Q werden in den Polymermischungen Polymere T ausgewählt aus der Gruppe bestehend aus: Polymilchsäure, Polycaprolacton, Polypropylencarbonat, Polyglycolid, aliphatischem Polyester, Zelluloseacetat und Polyhydroxyalkanoat eingesetzt.

Als Polymer T ist beispielsweise Polymilchsäure geeignet.

Polymilchsäure mit dem folgenden Eigenschaftsprofil wird bevorzugt eingesetzt:
- einer Schmelzvolumenrate (MVR bei 190° C und 2.16 kg nach ISO 1133 von 0.5 bis 200 bevorzugt 3 bis 70%, besonders bevorzugt 5 bis 50% ml/10 Minuten;
- einem Schmelzpunkt unter 240° C;
- einem Glaspunkt (Tg) größer 55°C:
- einem Wassergehalt von kleiner 1000 ppm:
- einem Monomeren-Restgehalt (Lactid) von kleiner 0.3%;
- einer Säurezahl gemessen nach DIN EN 12634 von kleiner 3, vorzugweise kleiner 1 mg KOH/g;
- einem Molekulargewicht von größer 50 000 Dalton.

Bevorzugte Polymilchsäuren sind je nach Anwendung dünnflüssige beispielsweise für die Papierbeschichtung (NatureWorks® 6201 D, 6202 D, 6251 D, 3051 D und insbesondere 3251 D (Polymilchsäure der Fa. NatureWorks) oder viskosere Polymilchsäure beispielsweise für Filmanwendungen bevorzugt NatureWorks® 4042 D. Es können auch Mischungen verschiedener Polymilchsäuren eingesetzt werden.

Unter Polyhydroxyalkanoaten werden in erster Linie Poly-4-hydroxybutyrate und Poly-3-hydroxybutyrate verstanden, weiterhin sind Copolyester der vorgenannten Hydroxybutyrate mit 3-Hydroxyvaleraten oder 3-Hydroxyhexanoat umfasst. Poly-3-hydroxybutyrate-co-4-hydroxybutyrate sind insbesondere von der Fa. Metabolix bekannt. Sie werden unter dem Handelsnamen Mirel® vertrieben. Poly-3-hydroxybutyrate-co-3-hydroxyhexanoate sind von der Fa. P&G oder Kaneka bekannt. Poly-3-hydroxybutyrate werden beispielsweise von der Fa. PHB Industrial unter dem Markennamen Biocycle® und von der Fa. Tianan unter dem Namen Enmat® vertrieben.

Die Polyhydroxyalkanoate weisen in der Regel ein Molekulargewicht Mw von 100.000 bis 1.000.000 und vorzugsweise von 300.000 bis 600.000 auf.

Polycaprolacton wird von der Fa. Daicel unter dem Produktnamen Placcel^{®} vermarktet.

Unter Polypropylencarbonat warden Copolymerisate von Propylenoxid und Kohlendioxid verstanden (siehe beispielsweise WO 07/125039).

Polymer T kann auch aliphatische Polyester Q' umfassen, die kontinuierlich oder diskontinuierlich hergestellt worden sind. Bevorzugt werden diese beispielsweise mit den nach Stufe iii kontinuierlich hergestellten teilaromatischen Polyester Q in Stufe iv gemischt.

Vorzugsweise können auch Mischungen von mehreren Polymeren T in Stufe 4 zugeführt werden. Beispielsweise eignen sich die Mischungen aus Polymilchsäure und α-liphatischem Polyester Q', sowie Polymilchsäure und Polypropylencarbonat als Polymere T.

Die eingangs erwähnten Polymermischungen weisen eine hohe biologische Abbaubarkeit bei gleichzeitig guten Filmeigenschaften auf.

Typische Polyestermischungen, die mit dem erfindungsgemäßen Verfahren zugänglich sind, enthalten:
a) 10 bis 80 Gew.-%, vorzugsweise 40 bis 75 Gew.-% und insbesondere bevorzugt 50 bis 70 Gew.-% eines biologisch abbaubaren Polyesters (Q) aus aliphatischen oder aliphatischen und aromatischen Dicarbonsäuren und aliphatischen Dihydroxyverbindungen, und
b) 20 bis 90 Gew.- %, vorzugsweise 25 bis 60 Gew.-% und insbesondere bevorzugt 30 bis 50 Gew.-% eines oder mehrerer Polymere (T) ausgewählt aus der Gruppe bestehend aus: Polymilchsäure, Polycaprolacton, Polypropylencarbonat und Polyhydroxyalkanoat.

Die genannten Polyestermischungen sind biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400 beschrieben.

Im Folgenden wird das erfindungsgemäße Verfahren näher beschrieben.

In einer Vorstufe werden die Komponenten A, B und gegebenenfalls C gemischt. In der Regel werden 1,0 mol-Äquivalente einer Mischung aus aliphatischen und aromatischen Dicarbonsäuren oder deren Ester (Komponente A), 1,1 bis 1,5, vorzugsweise 1,2 bis 1,4 mol-Äquivalente aliphatischen Dihydroxyverbindungen (Komponente b1), 0 bis 2, vorzugsweise 0,01 bis 0,5 Gew.-% bezogen auf Polymermenge nach Stufe iii einer Verbindung b2 und gegebenenfalls weitere Comonomere (Komponente C) vorgemischt.

In einer bevorzugten Verfahrensweise werden die Dicarbonsäuren als freie Säuren (Komponente A) eingesetzt. Hierbei wird die Mischung in den obengenannten Mischungsverhältnissen - ohne Zugabe eines Katalysators - zu einer üblicherweise auf 20 - 70°C temperierten Paste vermischt.

Alternativ hierzu werden die flüssigen Ester der Dicarbonsäuren (Komponente A) und die Dihydroxyverbindung und gegebenenfalls weiteren Comonomeren, in den obengenannten Mischungsverhältnissen - ohne Zugabe eines Katalysators - in der Regel bei einer Temperatur von 140 - 200°C vermischt.

In einer weiteren Alternative wird eine oder beide Dicarbonsäuren mit der aliphatischen Dihydroxyverbindungen zu einem rein aliphatischen oder aromatischen Polyester in einer Vorstufe verestert und dieser dann mit der jeweils anderen Dicarbonsäure und weiterer aliphatischen Dihydroxyverbindung sowie gegebenenfalls Verbindung b2 gemischt. Beispielsweise kann Polybutylenterephthalat und/oder Polybutylenadipinat in diese Vorstufe eingesetzt werden.

In Stufe i) wird die zuvor beschriebene Paste, Aufschlämmung und/oder Flüssigkeit (Vorstufe) aus aliphatischen und aromatischen Dicarbonsäuren (A) und einer aliphatischen Dihydroxyverbindung (b1), gegebenenfalls Verbindung (b2) und weiteren Comonomeren (Komponente C) in Gegenwart von 0,001 bis 1 Gew.-%, vorzugsweise 0,03 bis 0,2 bezogen auf Polymermenge nach Stufe iii eines Katalysators bis zu einer Viskositätszahl nach DIN 53728 von in der Regel 5 bis 15 cm³/g verestert.

Die überschüssige Diolkomponente wird in der Regel abdestilliert und nach beispielsweise destillativer Aufreinigung wieder dem Kreislauf zugeführt.

In Stufe i) wird entweder die Gesamtmenge oder eine Teilmenge - vorzugsweise 50 bis 80 Teile des Katalysators zudosiert. Als Katalysatoren werden üblicherweise Zink-, Aluminium und insbesondere Titan-Verbindungen eingesetzt. Titan-Katalysatoren wie Tetrabutylorthotitanat oder Tetra(iso-propyl)orthotitanat haben gegenüber den in der Literatur häufig verwendeten Zinn, Antimon, Kobalt und Blei-Verbindungen wie Zinndioctanat zudem den Vorteil, dass im Produkt verbleibende Restmengen des Katalysators oder Folgeprodukte des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen.

Gleichzeitig werden in Stufe i) eine Temperatur von 180 und 260 °C und vorzugsweise 220 bis 250°C sowie ein Druck von 0,6 bis 1,2 bar und vorzugsweise 0,8 bis 1,1 bar eingestellt. Die Stufe i) kann in einem Mischaggregat wie beispielsweise einem Hydrocylon durchgeführt werden. Typische Verweilzeiten liegen bei 1 bis 2 Stunden.

Vorteilhaft werden Stufe i) und ii) in einem einzigen Reaktor wie beispielsweise einem Turmreaktor durchgeführt (siehe beispielsweise WO 03/042278 und DE-A 199 29 790) wobei der Reaktor die für die jeweilige Stufe geeigneten Einbauten aufweist.

Gegebenenfalls kann in Stufe i) und/oder ii) weitere Komponente b1 sowie die optionale Komponente c) zugefügt werden. Im Allgemeinen wird in Stufe i) ein Verhältnis von Komponente B (Diol) zu Disäuren A von 1,5 bis 2,5 und vorzugsweise 1,8 bis 2,2 eingestellt.

In Stufe ii) wird die in Stufe i (Veresterung) erhaltene Flüssigkeit zusammen mit gegebenenfalls der Restmenge an Katalysator in einen für die Vorkondensation geeigneten Reaktor eingespeist. Für die Vorkondensation haben sich Reaktoren wie ein Rohrbündelreaktor, eine Kesselkaskade oder eine Blasensäule und insbesondere eine Fallstromkaskade gegebenenfalls mit Entgasungseinheit als geeignet erwiesen (Fahrweise iia). In der Regel werden Reaktionstemperaturen von 230 bis 270 °C, vorzugsweise 240 bis 260 °C und Drucke zu Beginn der Stufe ii) von 0,1 bis 0,5, vorzugsweise 0,2 bis 0,4 bar und am Ende der Stufe ii) von 5 bis 100 mbar, vorzugsweise 5 bis 20 mbar eingestellt. Es lassen sich bei Verweilzeiten von 60 bis 160 Minuten aliphatisch/aromatische Präpolyester mit einer Viskositätszahl nach DIN 53728 von 20 bis 60 und vorzugsweise 25 bis 55 cm³/g herstellen. Die Säurezahlen nach DIN EN 12634 der Präpolyester können nach Stufe ii) in Abhängigkeit von der Herstellungsweise noch stark variieren. Startet man in der Vorstufe mit den freien Dicarbonsäuren, so liegen die Säurezahlen am Ende der Stufe ii) noch relativ hoch; sie sinken jedoch in Stufe iii) noch ab. Ist man in der Vorstufe mit den entsprechenden Dicarbonsäureester gestartet, so ist die Säurezahl m Ende der Stufe ii) vergleichsweise klein. Hier steigen jedoch die Säurezahlen im Verlauf der Stufe iii) an. In der Regel liegen die Säurezahlen nach DIN EN 12634 am Ende der Stufe ii) bei 0,7 bis 2 mg KOH/g.

Als besonders vorteilhaft für die Vorkondensation ii) haben sich die in WO-A 03/042278 und WO-A 05/042615 detailliert beschriebenen Turmreaktoren erwiesen, bei denen der Produktstrom im Gleichstrom über einen ein- oder mehrstufigen Fallfilmverdampfer geführt wird, wobei die Reaktionsdämpfe - insbesondere Wasser, THF und bei Einsatz von Dicarbonsäureestern Alkohole - an mehreren Stellen über den Reaktor verteilt abgezogen werden (Fahrweise iib). Auf die in WO-A 03/042278 und WO-A 05/042615 beschriebene Gleichstromfahrweise mit einer kontinuierlichen - mindestens an mehreren Stellen erfolgenden - Abführung der Reaktionsdämpfe wird hier ausdrücklich Bezug genommen. Diese Fahrweise hat insbesondere die folgenden Vorteile:
- man kann auf Pumpen zur Beförderung des Produktstroms weitgehend verzichten; der Produktablauf lässt sich als gravimetrischer Fluss einfacher steuern; Der Reaktor kann bei leichtem Überdruck, Normaldruck oder mit einem geringen Unterdruck (siehe oben) gefahren werden
- die kontinuierliche Abführung der Reaktionsdämpfe in situ aus dem Reaktionsgemisch schiebt das Gleichgewicht bei bereits sehr schonender Fahrweise auf die Seite der Reaktionsprodukte. Durch die rasche Abführung der Reaktionsdämpfe werden weiterhin Nebenreaktionen vermieden bzw. zumindest unterdrückt;
- In der Regel lassen sich mit der oben beschriebenen Fahrweise aliphatisch/aromatische Präpolyester mit einer Viskositätszahl nach DIN 53728 von 25 bis 55 cm³/g herstellen. Weiterhin weisen diese Präpolyester sehr niedrige Säurezahlen nach DIN EN 12634 auf.

Die Reaktionsbrüden, die im wesentlichen aus Wasser und bei Einsatz von Dicarbonsäureestern aus Alkohol, aus überschüssigem Diol und Nebenprodukt THF - bei Einsatz des Diols 1,4-Butandiol - bestehen, werden nach üblichen Verfahren destillativ aufgereinigt und in den Prozess wieder zurückgefahren.

Im Polykondensationsschritt iii) wird der vorkondensierte Polyester gegebenenfalls mit einem Deaktivator für den Katalysator versetzt. Als Deaktivatoren kommen insbesondere Phosphor-Verbindungen entweder Organophosphite wie phosphonige Säure oder phosphorige Säure in Betracht. Der Einsatz von Deaktivatoren ist besonders ratsam, wenn hochreaktive Titankatalysatoren eingesetzt werden. Die Deaktivatoren können in einer Menge von 0,001 bis 0,1 Gew.-%, vorzugsweise 0,01 bis 0,05 Gew.-% bezogen auf die Polymermenge nach Stufe iii), zugesetzt werden. Vorzugsweise wird ein Ti/P Verhältnis von 1,3-1,5 : 1 und insbesondere bevorzugt 1,1-1,3 : 1 eingestellt.

Im Polykondensationsschritt iii) wird der vorkondensierte Polyester gegebenenfalls mit einem Farbstabilisator für die Kondensation versetzt. Als Farbstabilisator kommen insbesondere Phophorverbindungen in Betracht. Beispiele sind Phosphorsäure, Phosphorige Säure, Triphenylphosphit, Triphenylphosphat, IrgafosPEPQ und Natriumhypophosphit und Natriumphosphit. Diese Phosphorverbindungen können auch als Gemisch verwendet werden. Der Einsatz von Farbstabilisatoren führt im Allgemeinen zu einer Verlangsamung der Kondensationsgeschwindigkeit. Ein besonderes geeigneter Farbstabilisatoren ist Triphenylphosphat, da die Kondensationsgeschwindigkeit nicht beeinträchtigt wird.

Die Farbstabilisatoren können in einer Menge von 0,001 bis 1,5 Gew.-%, vorzugsweise 0,01 bis 1,0 Gew.-% bezogen auf die Polymermenge nach Stufe iii), zugesetzt werden. Vorzugsweise wird ein Ti/P Verhältnis (mol/mol) von 1,0 : 0,3-1,0 und insbesondere bevorzugt 1,0 : 0,5-1,0 eingestellt.

Im Polykondensationsschritt iii) wird der vorkondensierte Polyester gegebenenfalls mit einem Aktivator für die Kondensation versetzt. Als Aktivator kommen insbesondere Phophorverbindungen in Betracht. Beispiele sind di-Natriumhydrogenphosphat, Calciumhypophosphit, Calciumphosphit, Calciumphosphat, Natriumhypophosphit, Natriumphosphit, Triphenylphosphit, Triphenylphosphat, Trimethylphosphat, Triethylphosphat, Tripropylphosphat, Tributylphosphat, Irgafos 168. Diese Phosphorverbindungen können auch als Gemische eingesetzt werden. Besonders geeignete Aktivatoren sind di-Natriumhydrogenphosphat und Natriumphosphit.
Die Aktivatoren können in einer Menge von 0,001 bis 1,5 Gew.-%, vorzugsweise 0,01 bis 1,0 Gew.-% bezogen auf die Polymermenge nach Stufe iii), zugesetzt werden. Vorzugsweise wird ein Ti/P Verhältnis (mol/mol) von 1,0-1,5 : 1 und insbesondere bevorzugt 1,1-1,3 : 1 eingestellt.

Besonderes interessant ist der kombinierte Einsatz: Farbstabilisator und Aktivator wie beispielsweise Triphenylphosphat / di-Natriumhydrogenphosphat.

Die Polykondensation erfolgt in einem sogenannten Finisher. Als Finisher haben sich insbesondere Reaktoren wie ein Ringscheibenreaktor oder ein Käfigreaktor - wie sie in der US 5779986 und EP 719582 beschrieben sind - als geeignet erwiesen. Insbesondere letzterer trägt der mit zunehmender Reaktionsdauer zunehmende Viskosität des Polyesters Rechnung. In der Regel werden Reaktionstemperaturen von 220 bis 270°C, vorzugsweise 230 bis 250°C und Drucke von 0,2 bis 5 mbar, vorzugsweise 0,5 bis 3mbar eingestellt. Es lassen sich bei Verweilzeiten von 30 bis 90 Minuten, vorzugsweise 40 bis 80 Minuten aliphatisch/aromatische Polyester mit einer Viskositätszahl nach DIN 53728 von 70 bis 130 cm³/g und Säurezahlen nach DIN EN 12634 von 0,5 bis 1,2 vorzugsweise 0,6 bis 0,9 mg KOH/g herstellen. Typische Molekulargewichte (Mn) liegen bei 10000 bis 25000, Molekulargewichte (Mw) bei 35000 bis 70000 bei dieser Stufe.

In Stufe iv werden die beiden Polymerströme Q und T in einem dafür geeigneten Mischungsaggregat zusammengeführt. Hierfür eignen sich beispielsweise List-Reaktor, Extruder oder statischer Mischer.

Besonders bevorzugt werden ein oder mehrere Zusatzstoffe wie Gleitmittel (e1), Nukleierungsmittel (e2) und/oder Verträglichkeitsvermittler/Kettenverlängerer (d3) und/oder Säurefänger (d4) mit dem Polymer T zu einem Mastermatch gemischt und dieser Masterbatch in Stufe iv zugemischt.

Mit dem erfindungsgemäßen vierstufigen Verfahren lassen sich prozessfähig und effizient Polyestermischungen, die für eher niedrigviskose Anwendungen wie beispielsweise die Papierbeschichtung von Interesse sind, herstellen.

Für zahlreiche Extrusionsanwendungen wie beispielsweise Film- und Schaumanwendungen werden viskosere Polymermischungen benötigt. Hier bietet es sich an die Stufe v anzufügen.

In der Kettenverlängerung (optionale Stufe v) wird die Polymermischung zusammen mit 0,01 bis 4 Gew.-%, vorzugsweise 0,1 bis 2 Gew.-% und insbesondere bevorzugt 0,5 bis 1,2 Gew.-% bezogen auf den Polyester in einen Extruder, einem kontinuierlichen Kneter (List-Reaktor) oder einem statischen Mischer eingespeist. Beispielhaft seien folgende Einbauten genannt: Beim statischer Mischer können SMR, SMX, SMXL-Elemente oder Kombinationen daraus z.B. von Fa. Sulzer Chemtech AG, Schweiz eingesetzt werden. Beispiele für einen List-Reaktor sind je nach Anwendungsfeld: ein einwelliger DISCOTHERM B oder zweiwellige CRP- und ORP-Reaktoren. Als Extruder kommen Ein- oder Zweiwellenextruder in Frage.

Als Kettenverlängerer kommen die zuvor beschriebenen Isocyanate oder Isocyanurate d1, Peroxide d2 und Epoxide d3a in Frage. Beispielsweise sind dies Diisocyanate ausgewählt aus der Gruppe bestehend aus Toluylen-2,4-diisocyanat, Toluylen-2,6-diisocyanat, 4,4'- und 2,4'-Diphenylmethan-diisocyanat, Naphthylen-1,5-diisocyanat, Xylylendiisocyanat, Hexamethylendiisocyanat, Pentamethylendiisocyanat, Isophorondiisocyanat und Methylen-bis (4-isocyanatocyclohexan). Besonders bevorzugt ist Hexamethylendiisocyanat.

Zur Herstellung von Polyestern im beanspruchten Viskositätsbereich und gleichzeitig niedrigen Säurezahlen kann es vorteilhaft sein, sogenannte Säurefänger wie die eingangs beschriebenen Komponenten d3 und d4 zuzusetzen. Vorzugsweise geschieht dies in einer Konzentration von 0,01 bis 2,0 und insbesondere von 0,02 bis 1,0 Gew.-% bezogen auf die Polymermischung. Die Zugabe der Säurefänger erfolgt sinnvoller Weise zu Beginn, während oder am Ende der Stufe iii oder in einem vorgelagerten Schritt zusammen mit dem Mischvorgang in Stufe iv. Als Kettenverlängerer sind die Komponenten d1, d2 und d3a besonders gut geeignet. Die Säurefänger d3 und d4 können jedoch auch nach Zugabe der Kettenverlängerer d1 und d2 zugegeben werden.

Die Kettenverlängerung (Polyaddition, Stufe v) erfolgt bei Reaktionstemperaturen von 220 bis 270°C, vorzugsweise 230 bis 250°C und bei Überdruck oder Normaldruck je nach verwendetem System. Es lassen sich bei Verweilzeiten von 2 bis 30 Minuten, vorzugsweise 4 bis 15 Minuten Polyestermischungen mit einer Viskositätszahl nach DIN 53728 von 160 bis 320 cm³/g, und Säurezahlen nach DIN EN 12634 von vorzugsweise 0,5 bis 1,2 und insbesondere bevorzugt von 0,6 bis 1,0 mg KOH/g realisieren.

Der MVR (Schmelzevolumenrate) nach EN ISO 1133 (190°C, 2,16 kg Gewicht) nach Stufe v liegt im Allgemeinen bei 0,5 bis 6,0 cm³/10 min, bevorzugt bei 1,0 bis 5,0 und besonders bevorzugt bei 1,5 bis 3 cm³/10 min in Abhängigkeit von dem verwendeten Polymilchsäure-Typ und -Gehalt in der Mischung.

Während die Verbindungen b2 wie zuvor beschrieben insbesondere als Vernetzer wirken, wirken die Isocyanate bei niedrigen Temperaturen insbesondere als lineare Kettenverlängerer. Wird die Kettenverlängerung (Stufe iv) bei höheren Temperaturen, insbesondere bei Temperaturen über 120 °C, durchgeführt, tritt Allophanatbildung auf. Der Kettenverlängerer wirkt nunmehr auch als Verzweiger und hat unmittelbaren Einfluss auf die strukturelle Viskosität der biologisch abbaubaren Polyester. Das rheologische Verhalten der Schmelzen verbessert sich; die biologisch abbaubaren Polyester lassen sich leichter verarbeiten, beispielsweise besser zu Folien durch Schmelzeverfestigung ausziehen. Die Isocyanate d1 wirken scherentzähend, d.h. die Viskosität unter Belastung wird geringer.

Der Reaktor, in dem die Kettenreaktion durchgeführt wird, hat die zuvor beschriebenen Einbauten, die für eine gute Durchmischung des Produktstroms sorgen.

Auf Grund des starken Viskositätsaufbaus bei der Kettenverlängerung kann es von Vorteil sein, die Kettenverlängerung im Reaktor nur soweit zu fahren bis der Kettenverlängerer zumindest mit einer funktionellen Einheit abreagiert hat. Die Vollendung des Kettenaufbaus kann beispielsweise in einem separaten Rührkessel oder in einem Rohr ohne Einbauten erfolgen. Auf diese Weise lassen sich Verstopfungen und Wandbelegungen vermeiden.

Die abreagierte Schmelze wird in der Regel über einen Schmelzefilter direkt in die Konfektionierung wie beispielsweise eine Unterwassergranulierung übergeführt.

Mit dem erfindungsgemäßen bevorzugt fünfstufigen verfahren lassen sich viskose Polyestermischungen mit niedriger MVR herstellen die sich hervorragend für Schau- oder Filmanwendungen eignen. Insbesondere Polyestermischungen für dünne, stippenfreie Filme können so prozessfähig hergestellt werden.

### Messmethoden:

Die Säurezahl wurde nach DIN EN 12634 vom Oktober 1998 bestimmt. Als Lösemittelgemisch wurde eine Mischung aus 1 Volumenteil DMSO, 8 Volumenteile Propan-2-ol und 7 Volumenteile Toluol verwendet. Die Probe wurde auf 50°C erhitzt und mit einer Einstabelektrode mit Kaliumchlorid Füllung verknüpft. Als Maßlösung wurde eine Tetramethylammonium-Hydroxid-Maßlösung verwendet.

Die Bestimmung der Viskositätszahl erfolgt nach DIN 53728 Teil 3, 3. Januar 1985. Als Lösungsmittel wurde das Gemisch: Phenol/Dichlorbenzol im Gewichtsverhältnis 50/50 verwendet.

Die Bestimmung der Schmelze-Volumenfließrate (MVR) erfolgte nach ISO 1133. Die Prüfbedingungen betrugen 190°C, 2,16 kg. Die Aufschmelzzeit betrug 4 Minuten. Der MVR gibt die Geschwindigkeit der Extrusion eines geschmolzenen Kunststoff-Formteils durch ein Extrusionswerkzeug von festgelegter Länge und festgelegtem Durchmesser unter den vorbeschriebenen Bedingungen: Temperatur, Belastung und Lage des Kolbens. Bestimmt wird das in einer festgelegten Zeit extrudierte Volumen im Zylinder eines Extrusionsplastometers.

### Beispiele

### 1. Kontinuierliche Herstellung von Polybutylenadipat-coterephthalat/Polymilchsäure-Mischung kettenverlängert mit HDI

Zur Herstellung des biologisch abbaubaren Polyesters wurden 440 kg/h Dimethylterephthalat, 510 kg/h eines Prepolyesters aus Adipinsäure und 1,4 Butandiol (Mn 2000 g/mol), 270 kg/h 1,4- Butandiol und 1,0 kg/h Glycerin mit 0,55 kg/h Tetrabutylorthotitanat kontinuierlich in eine mehrstufige Rührkesselkaskade gegeben. Das Reaktionsgemisch wurde bei Normaldruck innerhalb der Rührkesselkaskade bei Temperaturen von 180°C bis 210°C und einer Verweilzeit von 2,5 h umgeestert und das entstehende Kondensationsprodukt Methanol abdestilliert. Der so erhaltende niedermolekulare Polyester wies eine Viskositätszahl (VZ) von 10 cm³/g auf.

Anschließend wurde das Reaktionsgemisch in einen nachgeschalteten Steigrohrreaktor, in dem die Schmelze durch eine Vielzahl an beheizten Rohren geführt wird (siehe DE 19509551) unter Zugabe von 0,30 kg/h Tetrabutylorthotitanat auf 260 °C erhitzt, der Druck auf 100 mbar abgesenkt und der überwiegende Teil an überschüssigem Butandiol abdestilliert. Nach einer Verweilzeit von 45 Minuten wies der Polyester eine VZ von 23 cm³/g auf.
Nach Zugabe von 0,28 kg/h phosphoriger Säure wurde das Reaktionsgemisch in einen Ringscheibenreaktor (vergleiche US 5,779,986) übergeführt, und bei einer Temperatur von 250 °C und einem Druck von 4 mbar für weitere 45 Minuten polykondensiert und der verbleibende Überschuss an Butandiol abdestilliert. Der so erhaltene Polyester wies eine VZ von 89 cm³/g und eine Säurezahl (SZ) von 1,0 mg KOH/g auf.
In Stufe iv wurde der heiße Schmelzestrom des Polyesters (68 Gew.-%) mit einem heißen Schmelzestrom von Polymilchsäure (32 Gew.-% NatureWorks 3251 D), die zuvor durch einen Extruder aufgeschmolzen worden war, in einem statischen Mischer gemischt.
Im Anschluss an die Polykondensation wurden zu dem Polyester bei 240°C 8,0 kg/h Hexamethylendiisocyanat (HDI) unter Verwendung eines statischen Mischsystems zudosiert. Nach einer Verweilzeit von 7 Minuten wurde der Polyester unter Verwendung einer Unterwasser-Granulierung granuliert und getrocknet. Der so erhaltene Polyester wies eine VZ von 185 cm³/g, ein Molekulargewicht Mn von 32.000 g/mol (bzw. Mw von 135.000 g/mol), eine MVR von 5 cm³/10 min und eine SZ von 1,1 mg KOH/g auf. Die Schmelze ließ sich problemlos granulieren und im Anschluss zu stippenfreien Chill-Roll oder Blasfolien verarbeiten.

### 2. Kontinuierliche Herstellung von Polybutylenadipat-co-terephthalat/Polymilchsäure-Mischung kettenverlängert mit HDI

Zur Herstellung des biologisch abbaubaren Polyesters wurden 19 kg/h Terephthalsäure, 19 kg/h Adipinsäure, 32 kg/h 1,4-Butandiol und 0,05 kg/h Glycerin bei 35°C physikalisch gemischt und anschließend das Gemisch kontinuierlich in einen Veresterungskessel (z.B. ausgelegt als Hydrozyklon, wie z.B. beschrieben in WO 03/042278 A1) übergeführt. Unter Zugabe von weiteren 16 kg/h 1,4-Butandiol und 0,022 kg/h Tetrabutylorthotitanat (TBOT) wurde das Gemisch bei einer Temperatur von 240°C, einer Verweilzeit von 1,5 h und einem Druck von 0,85 bar verestert und das entstehende Kondensationsprodukt Wasser, sowie Teile des Überschusses an Butandiol abdestilliert. Der so erhaltende niedermolekulare Polyester wies eine Viskositätszahl (VZ) von 12 cm³/g auf.
Anschließend wurde das Reaktionsgemisch unter Zugabe von weiteren 0,012 kg TBOT/h, bei einer von 250 auf 260 °C ansteigenden Temperatur, einer Verweilzeit von 2 h und einem von 300 mbar auf 10 mbar sinkendem Druck über eine Fallstromkaskade (wie z.B. beschrieben in WO 03/042278 A1) geführt und der überwiegende Teil an überschüssigem Butandiol abdestilliert. Der so erhaltende Polyester wies eine Viskositätszahl (VZ) von 47 cm³/g auf.
Nach Zugabe von 0, 01 kg/h phosphoriger Säure wurde das Reaktionsgemisch in einen Polykondensationsreaktor (wie z.B. beschrieben in EP 0719582) übergeführt, und bei einer Temperatur von 245°C und einem Druck von 1 mbar für weitere 45 Minuten polykondensiert und der verbleibende Überschuss an Butandiol abdestilliert. Der so erhaltene Polyester wies eine VZ von 95 cm³/g und eine Säurezahl (SZ) von 0,6 mg KOH/g auf.
In Stufe iv wurde der heiße Schmelzestrom des Polyesters (55 Gew.-%) mit einem heißen Schmelzestrom von Polymilchsäure (45 Gew.-% NatureWorks 4042 D), die zuvor durch einen Extruder aufgeschmolzen worden war, in einem statischen Mischer gemischt.
Im Anschluss an die Polykondensation wurden zu dem Polyester bei 240°C 0,4 kg/h Hexamethylendiisocyanat (HDI) unter Verwendung eines statischen Mischsystems zudosiert. Nach einer Verweilzeit von 7 Minuten wurde der Polyester unter Verwendung einer Unterwasser-Granulierung granuliert und getrocknet. Der so erhaltene Polyester wies eine VZ von 280 cm³/g, ein Molekulargewicht Mn von 45.000 g/mol (bzw. Mw von 180.000 g/mol), eine MVR von 2,5 cm³/10 min und eine SZ von 0,8 mg KOH/g auf. Auch hier ließ sich die Polyestermischung granulieren und zu stippenfreien 20 µm dünnen Filmen auf einer Chill-Roll Anlage verarbeiten.

## Patentansprüche

1. Verfahren zur kontinuierlichen Herstellung von Polyestermischungen enthaltend:
a) 10 bis 80 Gew.-% eines biologisch abbaubaren Polyesters (Q) aus aliphatischen oder aliphatischen und aromatischen Dicarbonsäuren und aliphatischen Dihydroxyverbindungen, und
b) 20 bis 90 Gew.- eines oder mehrerer Polymere (T) ausgewählt aus der Gruppe bestehend aus: Polymilchsäure, Polycaprolacton, Polypropylencarbonat, Polyglycolid, aliphatischem Polyester, Zelluloseacetat und Polyhydroxyalkanoat,
wobei
i) eine Mischung aus den aliphatischen Dihydroxyverbindungen, den α-liphatischen und aromatischen Dicarbonsäuren und gegebenenfalls weiteren Comonomeren (Komponente C), ohne Zugabe eines Katalysators, zu einer Paste vermischt werden oder alternativ die flüssigen Ester der Dicarbonsäuren und die Dihydroxyverbindung und gegebenenfalls weiteren Comonomeren, ohne Zugabe eines Katalysators, eingespeist werden, in eine ersten Stufe diese Mischung zusammen mit der Gesamtmenge oder einer Teilmenge des Katalysators kontinuierlich verestert bzw. umgeestert wird;
ii) in einer zweiten Stufe kontinuierlich das gemäß i) erhaltene Umesterungs- bzw. Veresterungsprodukt bis zu einer Viskositätszahl nach DIN 53728 von 20 bis 70 cm³/g vorkondensiert wird;
iii) in einer dritten Stufe kontinuierlich das aus ii) erhältliche Produkt bis zu einer Viskositätszahl nach DIN 53728 von 60 bis 170 cm³/g polykondensiert wird und
iv) in einer vierten Stufe kontinuierlich das aus iii) erhältliche Produkt (Polyester Q) mit dem Polymeren T vermischt wird und
v) gegebenenfalls in einer fünften Stufe kontinuierlich die aus iv) erhältliche Polymermischung bis zu einer Viskositätszahl nach DIN 53728 von 150 bis 320 cm³/g in einer Polyadditionsreaktion mit einem Kettenverlängerer D umgesetzt wird.

2. Verfahren nach Anspruch 1, wobei der biologisch abbaubare Polyester Q aufgebaut ist aus:
A) einer Säurekomponente aus
a1) 30 bis 99 mol-% mindestens einer aliphatischen Dicarbonsäure oder deren Ester oder Mischungen davon
a2) 1 bis 70 mol-% mindestens einer aromatischen Dicarbonsäure oder deren Ester oder Mischungen davon und
a3) 0 bis 5 mol-% einer sulfonatgruppenhaltigen Verbindung,
wobei die Molprozente der Komponenten a1) bis a3) zusammen 100% ergeben und
B) einer Diolkomponente aus:
b1) mindestens äquimolare Mengen zur Komponente A eines C₂-bis C₁₂-Alkandiol oder Mischungen davon und
b2) 0 bis 2 Gew.-% bezogen auf die Komponenten A und b1) einer mindestens 3 funktionelle Gruppen enthaltenden Verbindung;
und gegebenenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen,
c2) mindestens einer Hydroxycarbonsäure der Formel IIa oder IIb 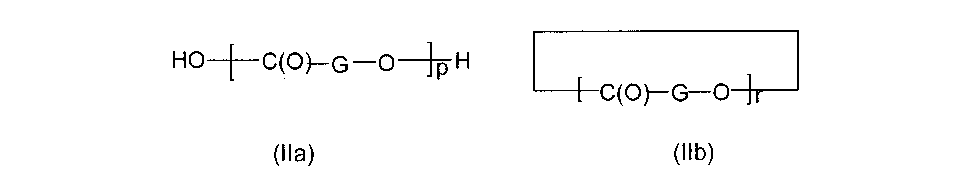 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einer Aminocarbonsäureverbindung, ausgewählt aus der Gruppe, bestehend aus Caprolactam, 1,6 Aminocapronsäure, Laurinlactam, 1,12-Aminolaurinsäure und 1,11-Aminoundecansäure
oder Mischungen aus c1) bis c5)
und
D) 0,01 bis 4 Gew.-% bezogen auf die Polymermischung in oder nach Stufe iv mindestens einer Komponente ausgewählt aus der Gruppe d1) bis d4)
d1) eines di- oder oligofunktionellen Isoscyanats und/oder Isocyanurat,
d2) eines di- oder oligofunktionellen Peroxids,
d3) eines di- oder oligofunktionellen Epoxids,
d4) eines di- oder oligofunktionellen Oxazolins, Oxazins, Caprolactams und/oder Carbodiimids;
E) 0 bis 10 Gew.-% bezogen auf die Polyestermenge nach Stufe iii einer Komponente ausgewählt aus der Gruppe e1) bis e2)
e1) eines Gleitmittels wie Erucasäureamid oder ein Stearat,
e2) eines Nukleierungsmittels wie Talkum, Bornitrit, PLLA-PDLA Stereokomplex, Calciumcarbonat, Polyethylenterephthalats oder Polybutylenterephthalats.

3. Verfahren nach Anspruch 1, wobei der biologisch abbaubare Polyester Q als aliphatische Dicarbonsäure (Komponente a1)) Bernsteinsäure, Adipinsäure oder Sebacinsäure, deren Ester oder Mischungen davon;
als aromatische Dicarbonsäure (Komponente a2)) Terephthalsäure oder deren Ester;
als Diolkomponente (Komponente B) 1,4-Butandiol oder 1,3-Propandiol,
als Komponente b2) Glycerin, Pentaerytrit, Trimethylolpropan und
als Komponente d1) Hexamethylendiisocyanat enthält.

4. Verfahren nach den Ansprüchen 1 bis 3, wobei die Veresterung /Umesterung (Stufe i)) - in Form eines Hydrozyklons mit anhängendem Wärmetauscher und Stufe i), ii) und iii) in Gegenwart eines Titankatalysators durchgeführt wird.

5. Verfahren nach den Ansprüchen 1 bis 4, wobei Stufe ii) in einem Turmreaktor durchgeführt wird und der Produktstrom im Gleichstrom über eine Fallfilmkaskade geführt wird und die Reaktionsdämpfe in situ aus dem Reaktionsgemisch entfernt werden.

6. Verfahren nach Anspruch 5, wobei in Stufe ii) das Umesterungs- bzw. Veresterungsprodukt bis zu einer Viskositätszahl nach DIN 53728 von 25 bis 55 cm³/g vorkondensiert wird.

7. Verfahren nach einem der Ansprüche 1 bis 6, wobei zwischen Stufe ii) und iii) dem Produktstrom 0,001 bis 0,1 Gew.-% einer deaktivierenden Phoshorverbindung oder 0,001 bis 1,5 Gew.-% einer farbstabilisierenden oder aktivierenden Phosphorverbindung zugefügt werden.

8. Verfahren nach einem der Ansprüche 1 bis 7, wobei zu Beginn, während oder am Ende der Stufe iii, in Stufe iv oder in einem vorgelagerten Schritt der Kettenverlängerung 0,01 bis 2,0 Gew.-% bezogen auf die jeweilige Polymermasse eines Säurefängers ausgewählt aus der Gruppe eines di-oder oligofunktionellen Epoxids (d3), Oxazolins, Oxazins, Caprolactams und/oder Carbodiimids (d4) zugegeben wird.

9. Verfahren nach einem der Ansprüche 1 bis 8, wobei Stufe iii) in einem Ringscheibenreaktor oder Käfigreaktor durchgeführt wird.

10. Verfahren nach einem der Ansprüche 1 bis 9, wobei in Stufe iv) 0,05 bis 2,0 Gew.-% bezogen auf die Polymermasse nach Stufe iii eines Gleitmittels e1 zugegeben wird.

11. Verfahren nach einem der Ansprüche 1 bis 9, wobei in Stufe iv) 0,05 bis 5,0 Gew.-% bezogen auf die Polymermasse nach Stufe iii eines Nukleierungsmittels e2 zugegeben wird.

12. Verfahren nach einem der Ansprüche 1 bis 9, wobei in Stufe iv) Polymer T als Masterbatch - enthaltend ein oder mehrere Zusatzstoffe wie Gleitmittel (e1), Nukleierungsmittel (e2) und/oder Verträglichkeitsvermittler/Kettenverlängerer (d3) und/oder Säurefänger (d4) - zugefahren wird.

13. Verfahren nach einem der Ansprüche 1 bis 9 zur Herstellung von Polyestermischungen enthaltend 40 bis 75 Gew.-% Polyester Q und 25 bis 60 Gew.-% Polymer T.

14. Verfahren nach einem der Ansprüche 1 bis 9 zur Herstellung von Polyestermischungen enthaltend 40 bis 75 Gew.-% Polyester Q und 25 bis 60 Gew.-% Polymilchsäure.

15. Verfahren nach einem der Ansprüche 1 bis 14 wobei die Stufen iv und gegebenfalls v) in einem Extruder, List-Reaktor oder statischen Mischer durchgeführt werden.

16. Verfahren nach einem der Ansprüche 1 bis 15, wobei in Stufe v) als Kettenverlängerer Hexamethylendiisocyanat (Komponente d1) eingesetzt wird.

## Claims

1. A process for the continuous production of polyester mixtures comprising:
a) from 10 to 80% by weight of a biodegradable polyester (Q) composed of aliphatic or aliphatic and aromatic dicarboxylic acids and of aliphatic dihydroxy compounds, and
b) from 20 to 90% by weight of one or more polymers (T) selected from the group consisting of: polylactic acid, polycaprolactone, polypropylene carbonate, polyglycolide, aliphatic polyester, cellulose acetate, and polyhydroxyalkanoate,
where
i) a mixture composed of the aliphatic dihydroxy compounds, of the aliphatic and aromatic dicarboxylic acids and optionally of further comonomers (component C) is mixed, without addition of any catalyst, to give a paste or, as an alternative, the liquid esters of the dicarboxylic acids are fed into the system, as also are the dihydroxy compound and optionally further comonomers, without addition of any catalyst, and in a first stage this mixture, together with the entire amount or with a portion of the catalyst, is continuously esterified or transesterified;
ii) in a second stage, the transesterification or, respectively, esterification product obtained in i) is continuously precondensed to an intrinsic viscosity of from 20 to 70 cm³/g to DIN 53728;
iii)in a third stage, the product obtainable from ii) is continuously polycondensed as far as an intrinsic viscosity of from 60 to 170 cm³/g to DIN 53728, and
iv) in a fourth stage, the product obtainable from iii) (polyester Q) is continuously mixed with the polymer T, and
v) optionally in a fifth stage, the polymer mixture obtainable from iv) is continuously reacted in a polyaddition reaction with a chain extender D as far as an intrinsic viscosity of from 150 to 320 cm³/g to DIN 53728.

2. The process according to claim 1, where the biodegradable polyester Q is composed of:
A) an acid component composed of
a1) from 30 to 99 mol% of at least one aliphatic dicarboxylic acid or its esters, or a mixture thereof,
a2) from 1 to 70 mol% of at least one aromatic dicarboxylic acid or its esters, or a mixture thereof, and
a3) from 0 to 5 mol% of a compound comprising sulfonate groups,
where the total of the molar percentages of components a1) to a3) is 100%, and
B) a diol component composed of:
b1) at least equimolar amounts with respect to component A of a C₂-C₁₂ alkanediol, or a mixture thereof, and
b2) from 0 to 2% by weight, based on components A and b1), of a compound comprising at least 3 functional groups;
and optionally also one or more components selected from
C) a component selected from
c1) at least one dihydroxy compound comprising ether functions and having the formula I
**HO-[(CH₂)ₙ-O]ₘ-H** (I)
where n is 2, 3 or 4 and m is a whole number from 2 to 250,
c2) at least one hydroxycarboxylic acid of the formula IIa or IIb 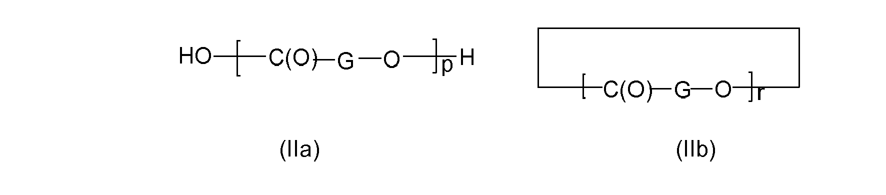 where p is a whole number from 1 to 1500 and r is a whole number from 1 to 4, and G is a radical selected from the group consisting of phenylene, -(CH₂)_{q}-, where q is a whole number from 1 to 5, -C(R)H- and -C(R)HCH₂, where R is methyl or ethyl,
c3) at least one amino-C₂-C₁₂ alkanol, or at least one amino-C₅-C₁₀ cycloalkanol, or a mixture of these,
c4) at least one diamino-C₁-C₈ alkane,
c5) at least one aminocarboxylic acid compound, selected from the group consisting of caprolactam, 1,6-aminocaproic acid, laurolactam, 1,12-aminolauric acid, and 1,11-aminoundecanoic acid,
or a mixture composed of c1) to c5),
and
D) from 0.01 to 4% by weight, based on the polymer mixture in or after stage iv, of at least one component selected from the group d1) to d4)
d1) of a di- or oligofunctional isocyanate and/or isocyanurate,
d2) of a di- or oligofunctional peroxide,
d3) of a di- or oligofunctional epoxide,
d4) of a di- or oligofunctional oxazoline, oxazine, caprolactam, and/or carbodiimide;
E) from 0 to 10% by weight, based on the amount of polyester after stage iii, of a component selected from the group e1) to e2)
e1) of a lubricant, such as erucamide or a stearate,
e2) of a nucleating agent, such as talc, boron nitrite, PLLA-PDLA stereocomplex, calcium carbonate, polyethylene terephthalate, or polybutylene terephthalate.

3. The process according to claim 1, where the biodegradable polyester Q comprises, as aliphatic dicarboxylic acid (component a1)), succinic acid, adipic acid, or sebacic acid, ester thereof, or a mixture thereof;
as aromatic dicarboxylic acid (component a2)), terephthalic acid or ester thereof;
as diol component (component B), 1,4-butanediol or 1,3-propanediol,
as component b2), glycerol, pentaerythritol, trimethylolpropane, and
as component d1), hexamethylene diisocyanate.

4. The process according to claims 1 to 3, where the esterification/transesterification process (stage i)) uses a hydrocyclone with attached heat exchanger, and stage i), ii), and iii) is carried out in the presence of a titanium catalyst.

5. The process according to claims 1 to 4, where stage ii) is carried out in a tower reactor, and the product stream is conducted cocurrently through a falling-film cascade, and the reaction vapors are removed in situ from the reaction mixture.

6. The process according to claim 5, where, in stage ii), the transesterification product or esterification product is precondensed as far as an intrinsic viscosity of from 25 to 55 cm³/g to DIN 53728.

7. The process according to any of claims 1 to 6, where, between stage ii) and iii), from 0.001 to 0.1% by weight of a deactivating phosphorus compound or from 0.001 to 1.5% by weight of a color-stabilizing or activating phosphorus compound is added to the product stream.

8. The process according to any of claims 1 to 7, where at the start of, during, or at the end of stage iii, in stage iv, or in a previous step of chain extension, from 0.01 to 2.0% by weight, based on the respective polymer composition, of an acid scavenger selected from the group of a di- or oligofunctional epoxide (d3), oxazoline, oxazine, caprolactam, and/or carbodiimide (d4) is added.

9. The process according to any of claims 1 to 8, where stage iii) is carried out in a rotating-disk reactor or cage reactor.

10. The process according to any of claims 1 to 9, where, in stage iv), from 0.05 to 2.0% by weight of a lubricant e1 is added, based on the polymer composition after stage iii.

11. The process according to any of claims 1 to 9, where, in stage iv), from 0.05 to 5.0% by weight of a nucleating agent e2 is added, based on the polymer composition after stage iii.

12. The process according to any of claims 1 to 9, where, in stage iv), polymer T is fed in the form of masterbatch - comprising one or more additives such as lubricants (e1), nucleating agents (e2), and/or compatibilizers/chain extenders (d3), and/or acid scavengers (d4).

13. The process according to any of claims 1 to 9 for the production of polymer mixtures comprising from 40 to 75% by weight of polyester Q and from 25 to 60% by weight of polymer T.

14. The process according to any of claims 1 to 9 for the production of polyester mixtures comprising from 40 to 75% by weight of polyester Q and from 25 to 60% by weight of polylactic acid.

15. The process according to any of claims 1 to 14, where stage iv and optionally v) is/are carried out in an extruder, List reactor, or static mixer.

16. The process according to any of claims 1 to 15, where, in stage v), hexamethylene diisocyanate (component d1) is used as chain extender.

## Revendications

1. Procédé de fabrication continue de mélanges de polyester contenant :
a) 10 à 80 % en poids d'un polyester (Q) biodégradable constitué d'acides dicarboxyliques aliphatiques ou aliphatiques et aromatiques et de composés dihydroxy aliphatiques, et
b) 20 à 90 % en poids d'un ou de plusieurs polymères (T) choisis dans le groupe constitué par : l'acide polylactique, la polycaprolactone, le polycarbonate de propylène, le polyglycolide, le polyester aliphatique, l'acétate de cellulose et le polyalcanoate d'hydroxy, dans lequel
i) un mélange des composés dihydroxy aliphatiques, des acides dicarboxyliques aliphatiques et aromatiques et éventuellement d'autres comonomères (composant C), sans ajout d'un catalyseur, est mélangé en une pâte ou, en variante, les esters liquides des acides dicarboxyliques et le composé dihydroxy et éventuellement d'autres comonomères, sans ajout d'un catalyseur, sont introduits ; lors d'une première étape, ce mélange est estérifié ou transestérifié en continu avec la totalité ou une partie du catalyseur ;
ii) lors d'une deuxième étape, le produit de transestérification ou d'estérification obtenu selon i) est précondensé en continu jusqu'à un indice de viscosité selon DIN 53728 de 20 à 70 cm³/g ;
iii) lors d'une troisième étape, le produit pouvant être obtenu en ii) est polycondensé en continu jusqu'à un indice de viscosité selon DIN 53728 de 60 à 170 cm³/g ; et
iv) lors d'une quatrième étape, le produit pouvant être obtenu en iii) (polyester Q) est mélangé en continu avec le polymère T ; et
v) lors d'une cinquième étape, le mélange de polymères pouvant être obtenu en iv) est éventuellement mis en réaction en continu jusqu'à un indice de viscosité selon DIN 53728 de 150 à 320 cm³/g par une réaction de polyaddition avec un allongeur de chaînes D.

2. Procédé selon la revendication 1, dans lequel le polyester Q biodégradable est constitué par :
A) un composant acide constitué par :
a1) 30 à 99 % en moles d'au moins un acide dicarboxylique aliphatique ou son ester ou leurs mélanges ;
a2) 1 à 70 % en moles d'au moins un acide dicarboxylique aromatique ou son ester ou leurs mélanges ; et
a3) 0 à 5 % en moles d'un composé contenant des groupes sulfonate,
les pourcentages en moles des composants a1) à a3) ensemble étant de 100 % ; et
B) un composant diol constitué par :
b1) au moins des quantités équimolaires par rapport au composant A d'un alcanediol en C₂ à C₁₂ ou ses mélanges ; et
b2) 0 à 2 % en poids, par rapport au composants A et b1), d'un composé contenant au moins 3 groupes fonctionnels ;
et éventuellement également un ou plusieurs composants choisis parmi :
C) un composant choisi parmi :
c1) au moins un composé dihydroxy contenant des fonctions éther de formule I
HO-[(CH₂)ₙ-O]ₘ-H (I)
dans laquelle n représente 2, 3 ou 4 et m représente un nombre entier de 2 à 250,
c2) au moins un acide hydroxycarboxylique de formule IIa ou IIb 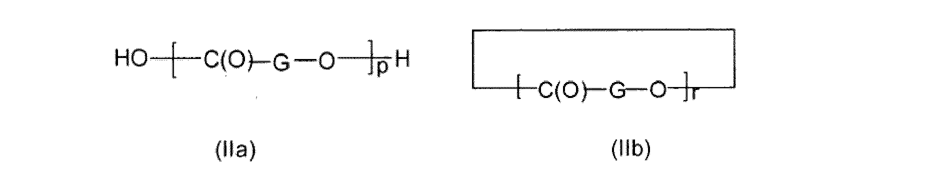 dans lesquelles p signifie un nombre entier de 1 à 1 500 et r signifie un nombre entier de 1 à 4, et G représente un radical choisi dans le groupe constitué par phénylène, -(CH₂)_{q}-, q signifiant un nombre entier de 1 à 5, -C(R)H- et -C(R)HCH₂, R représentant méthyle ou éthyle ;
c3) au moins un amino-alcanol en C₂ à C₁₂ ou au moins un amino-cycloalcanol en C₅ à C₁₀ ou leurs mélanges ;
c4) au moins un diamino-alcane en C₁ à C₈;
c5) au moins un composé d'acide aminocarboxylique choisi dans le groupe constitué par le caprolactame, l'acide 1,6-aminocaproïque, le laurine-lactame, l'acide 1,12-aminolaurique et l'acide 1,11-aminoundécanoïque ;
ou des mélanges de c1) à c5) ;
et
D) 0,01 à 4 % en poids, par rapport au mélange de polymère à ou après l'étape iv, d'au moins un composant choisi dans les groupes d1) à d4) :
d1) un isocyanate et/ou isocyanurate di- ou oligofonctionnel,
d2) un peroxyde di- ou oligofonctionnel,
d3) un époxyde di- ou oligofonctionnel,
d4) une oxazoline, une oxazine, un caprolactame et/ou un carbodiimide di- ou oligofonctionnel ;
E) 0 à 10 % en poids, par rapport à la quantité de polyester après l'étape iii, d'un composant choisi dans les groupes e1) à e2) :
e1) un lubrifiant tel que l'amide de l'acide érucique ou un stéarate,
e2) un agent de nucléation tel que le talc, le nitrite de bore, le stéréocomplexe PLLA-PDLA, le carbonate de calcium, le polyéthylène téréphtalate ou le polybutylène téréphtalate.

3. Procédé selon la revendication 1, dans lequel le polyester Q biodégradable contient
en tant qu'acide dicarboxylique aliphatique (composant a1)) l'acide succinique, l'acide adipique ou l'acide sébacique, leurs esters ou leurs mélanges ;
en tant qu'acide dicarboxylique aromatique (composant a2)) l'acide téréphtalique ou ses esters ;
en tant que composant diol (composant B) le 1,4-butanediol ou le 1,3-propanediol ;
en tant que composant b2) la glycérine, la pentaérythrite, le triméthylolpropane ; et
en tant que composant d1) le diisocyanate d'hexaméthylène.

4. Procédé selon les revendications 1 à 3, dans lequel l'estérification/transestérification (étape i)) est réalisée sous la forme d'un hydrocyclone avec échangeur de chaleur annexé, et les étapes i), ii) et iii) sont réalisées en présence d'un catalyseur de titane.

5. Procédé selon les revendications 1 à 4, dans lequel l'étape ii) est réalisée dans un réacteur à tour et le courant de produits est passé à co-courant sur une cascade de films tombants et les vapeurs de réaction sont éliminées in situ du mélange réactionnel.

6. Procédé selon la revendication 5, dans lequel, à l'étape ii), le produit de transestérification ou d'estérification est précondensé jusqu'à un indice de viscosité selon DIN 53728 de 25 à 55 cm³/g.

7. Procédé selon l'une quelconque des revendications 1 à 6, dans lequel, entre l'étape ii) et l'étape iii), 0,001 à 0,1 % en poids d'un composé de phosphore désactivant ou 0,001 à 1,5 % en poids d'un composé de phosphore stabilisant la couleur ou activateur est ajouté au courant de produits.

8. Procédé selon l'une quelconque des revendications 1 à 7, dans lequel, au début, pendant ou à la fin de l'étape iii, lors de l'étape iv ou lors d'une étape en amont d'allongement des chaînes, 0,01 à 2,0 % en poids, par rapport à la masse polymère respective, d'un capteur d'acides choisi dans le groupe constitué par un époxyde di- ou oligofonctionnel (d3), une oxazoline, une oxazine, un caprolactame et/ou un carbodiimide (d4) est ajouté.

9. Procédé selon l'une quelconque des revendications 1 à 8, dans lequel l'étape iii) est réalisée dans un réacteur à disque annulaire ou un réacteur à cage.

10. Procédé selon l'une quelconque des revendications 1 à 9, dans lequel, à l'étape iv), 0,05 à 2,0 % en poids, par rapport à la masse polymère après l'étape iii, d'un lubrifiant e1 est ajouté.

11. Procédé selon l'une quelconque des revendications 1 à 9, dans lequel, à l'étape iv), 0,05 à 5,0 % en poids, par rapport à la masse polymère après l'étape iii, d'un agent de nucléation e2 est ajouté.

12. Procédé selon l'une quelconque des revendications 1 à 9, dans lequel, à l'étape iv), un polymère T est introduit sous la forme d'un mélange maître contenant un ou plusieurs additifs tels qu'un lubrifiant (e1), un agent de nucléation (e2) et/ou un promoteur de compatibilité/allongeur de chaînes (d3) et/ou un capteur d'acides (d4).

13. Procédé selon l'une quelconque des revendications 1 à 9, pour la fabrication de mélanges de polyester contenant 40 à 75 % en poids d'un polyester Q et 25 à 60 % en poids d'un polymère T.

14. Procédé selon l'une quelconque des revendications 1 à 9, pour la fabrication de mélanges de polyester contenant 40 à 75 % en poids d'un polyester Q et 25 à 60 % en poids d'acide polylactique.

15. Procédé selon l'une quelconque des revendications 1 à 14, dans lequel les étapes iv et éventuellement v) sont réalisées dans une extrudeuse, un réacteur List ou un mélangeur statique.

16. Procédé selon l'une quelconque des revendications 1 à 15, dans lequel, à l'étape v), du diisocyanate d'hexaméthylène (composant d1) est utilisé en tant qu'allongeur de chaînes.
